# EUROPEAN PATENT APPLICATION

(11) **EP 4 395 424 A1**
(43) Date of publication of application: **03.07.2024**
(21) Application number: 22860269.4
(22) Date of filing: 11.08.2022
(51) Int. Cl.: H04W 52/14

(54) **CONTROL METHOD AND CONTROL APPARATUS FOR NETWORK NODE, NETWORK NODE AND BASE STATION**

(30) Priority: 23.08.2021 CN 202110970661
(71) Applicant: ZTE Corporation, Shenzhen, Guangdong 518057 (CN)
(72) Inventor: WANG, Yuxin, Shenzhen, Guangdong 518057 (CN); LU, Zhaohua, Shenzhen, Guangdong 518057 (CN); LI, Yong, Shenzhen, Guangdong 518057 (CN); CHEN, Yijian, Shenzhen, Guangdong 518057 (CN)
(74) Representative: Betten & Resch
(86) International application number: PCT/CN2022/111794
(87) International publication number: WO 2023/024923

(57) **Abstract**

The present disclosure discloses a network node control method and apparatus, a network node, and a base station. A network node control method is applicable to a network node and includes: receiving signaling sent by a base station, and adjusting an operational status and/or a phase status of the network node according to the signaling; or predefining an operational status and/or a phase status of the network node between a base station and the network node. A network node control method is applicable to a base station and includes: determining an operational status and/or a phase status of a network node, and sending signaling to the network node, where the signaling is used for indicating the operational status and/or the phase status of the network node; or predefining an operational status and/or a phase status of a network node between the base station and the network node.

## Description

### CROSS-REFERENCE TO RELATED APPLICATION

This application is filed on the basis of Chinese patent application No. 202110970661.7 filed August 23, 2021, and claims priority to the Chinese patent application, the entire contents of which are incorporated herein by reference.

### TECHNICAL FIELD

Embodiments of the present disclosure relate to the field of communications, and in particular, to a network node control method and apparatus, a network node, and a base station.

### BACKGROUND

The presence of an obstacle in the signal path during communication may affect the communication stability. Especially in 5G technologies, when millimeter wave 5G communication is used, 5G signals are likely to be blocked by obstacles due to the characteristics of high propagation loss and weak signal penetrability of millimeter waves, resulting in unsatisfactory communication stability. In a scheme provided in related technologies to solve the problem of unsatisfactory communication stability caused by obstacles in the communication process, the signal transmission power of the signal transmitting end in communication is increased, such that the signal can effectively penetrate the obstacles and be transmitted to the base station. However, this scheme has certain defects. For example, the increased power leads to an increase in the power consumption of the signal transmitting end. For example, when a mobile phone is used as the signal transmitting end, the increase in power consumption means that the mobile phone needs to consume more electricity. In addition, the increased power also leads to accelerated degrading of electronic components at the signal transmitting end, reducing the service life of the electronic device.

An intelligent reflecting surface (IRS) is a two-dimensional artificial material, which is composed of a large number of specially designed scattering elements. Therefore, the IRS can convert an incident signal in different manners. Each scattering element of the IRS can be controlled in a software-defined manner to change the reflected electromagnetic characteristics of the incident signal on the scattering element, to cause the signal to have stronger penetrability and stability. However, in related technologies and academic studies, the IRS arranged on the network node is composed of passive units, so the network node can hardly be identified by the communication network. How the communication network controls the network node after the network node accesses the communication network is also an issue. Therefore, the use of IRSs in communication is accompanied by problems regarding how the communication network controls the network node and what the network node feeds back to the communication network.

There is an urgent need to solve the technical problems in the related technologies.

### SUMMARY

The following is a summary of the subject matter set forth in the description. This summary is not intended to limit the scope of protection of the claims.

The present disclosure aims to at least solve one of the technical problems in the existing technology. Embodiments of the present disclosure provide a network node control method and apparatus, a network node, and a base station, to improve communication stability, reduce power consumption, or enhance adaptability.

An embodiment of the present application provides a network node control method, applied to a network node. The method includes: receiving signaling sent by a base station, where the signaling is used for indicating an operational status and/or a phase status of the network node, and adjusting the operational status and/or the phase status of the network node according to the signaling; or predefining an operational status and/or a phase status of the network node between a base station and the network node.

In an embodiment, the operational status of the network node includes network node partitioning, the network node receives signaling sent by the base station, the signaling is used for indicating a number of sub-blocks of the network node and/or for indicating an operational mode or a phase status of each sub-block of the network node, including: receiving higher-layer Radio Resource Control (RRC) signaling from the base station and determining a starting position of a block indicating an operational mode or a phase status of a sub-block in downlink control information (DCI); and receiving DCI of the base station, and determining the operational mode or the phase status of the sub-block.

In an embodiment, the operational status of the network node includes energy saving of the network node, signaling sent by the base station through higher-layer RRC is received, and it is determined whether the network node is in an energy saving state, or an on/off status of an active unit and/or a transmitting unit and/or a power amplifier unit is determined.

In an embodiment, the operational status of the network node includes energy saving of the network node; and the base station and the network node are predefined such that: in response to a beam or phase or operational mode of the network node being one or a subset of a predefined set of beams or phases or operational modes, it is determined that the network node is in a non-energy-saving state, or it is determined that an active unit and/or a transmitting unit and/or a power amplifier unit of the network node is in an on state; otherwise, it is determined that the network node is in an energy-saving state, or it is determined that the active unit and/or the transmitting unit and/or the power amplifier unit of the network node is in an off state.

In an embodiment, the operational status of the network node includes energy saving of the network node; and the base station and the network node are predefined such that: in response to a transmission performed by the network node being a downlink transmission, it is determined that the network node is in an energy saving state, or it is determined that an active unit and/or a transmitting unit and/or a power amplifier unit of the network node is in an off state; and in response to a transmission performed by the network node being an uplink transmission, it is determined that the network node is in a non-energy-saving state, or it is determined that the active unit and/or the transmitting unit and/or the power amplifier unit of the network node is in an on state; or in response to a transmission performed by the network node being a downlink transmission, it is determined that the network node is in a non-energy-saving state, or it is determined that an active unit and/or a transmitting unit and/or a power amplifier unit of the network node is in an on state; and in response to a transmission performed by the network node being an uplink transmission, it is determined that the network node is in an energy saving state, or it is determined that the active unit and/or the transmitting unit and/or the power amplifier unit of the network node is in an off state.

In an embodiment, the operational status of the network node includes energy saving of the network node; and the base station and the network node are predefined such that: in response to a user access or a data transmission performed by an activated user, it is determined that the network node is in a non-energy-saving state, or it is determined that an active unit and/or a transmitting unit and/or a power amplifier unit of the network node is in an on state; otherwise, it is determined that the network node is in an energy-saving state, or it is determined that the active unit and/or the transmitting unit and/or the power amplifier unit of the network node is in an off state.

In an embodiment, the base station and the network node are predefined such that: in response to a user access or in response to presence of an activated user and a data transmission performed by the activated user, a beam or phase or operational mode of the network node is one or a subset of a predefined set of beams or phases or operational modes.

In an embodiment, the base station and the network node are predefined such that in a slot group 1, a beam or phase or operational mode of the network node is one or a subset of a predefined set A of beams or phases or operational modes; and the base station and the network node are predefined such that in a slot group 2, the beam or phase or operational mode of the network node is one or a subset of a predefined set B of beams or phases or operational modes.

An embodiment of the present application provides a network node control method, applied to a base station. The method includes: determining an operational status and/or a phase status of a network node, and sending signaling to the network node, where the signaling is used for indicating the operational status and/or the phase status of the network node; or predefining an operational status and/or a phase status of a network node between the base station and the network node.

In an embodiment, the operational status of the network node includes network node partitioning, the network node receives signaling sent by the base station, the signaling is used for indicating a number of sub-blocks of the network node and/or for indicating an operational mode or a phase status of each sub-block of the network node, including: receiving higher-layer RRC signaling from the base station and determining a starting position of a block indicating an operational mode or a phase status of a sub-block in DCI; and receiving DCI of the base station, and determining the operational mode or the phase status of the sub-block.

In an embodiment, the operational status of the network node includes energy saving of the network node, signaling sent by the base station through higher-layer RRC, e.g., bitmap signaling, is received, and it is determined whether the network node is in an energy saving state, or an on/off status of an active unit and/or a transmitting unit and/or a power amplifier unit is determined.

In an embodiment, the operational status of the network node includes energy saving of the network node; and the base station and the network node are predefined such that: in response to a beam or phase or operational mode of the network node being one or a subset of a predefined set of beams or phases or operational modes, it is determined that the network node is in a non-energy-saving state, or it is determined that an active unit and/or a transmitting unit and/or a power amplifier unit of the network node is in an on state; otherwise, it is determined that the network node is in an energy-saving state, or it is determined that the active unit and/or the transmitting unit and/or the power amplifier unit of the network node is in an off state.

In an embodiment, the operational status of the network node includes energy saving of the network node; and the base station and the network node are predefined such that: in response to a transmission performed by the network node being a downlink transmission, it is determined that the network node is in an energy saving state, or it is determined that an active unit and/or a transmitting unit and/or a power amplifier unit of the network node is in an off state; and in response to a transmission performed by the network node being an uplink transmission, it is determined that the network node is in a non-energy-saving state, or it is determined that the active unit and/or the transmitting unit and/or the power amplifier unit of the network node is in an on state; or in response to a transmission performed by the network node being a downlink transmission, it is determined that the network node is in a non-energy-saving state, or it is determined that an active unit and/or a transmitting unit and/or a power amplifier unit of the network node is in an on state; and in response to a transmission performed by the network node being an uplink transmission, it is determined that the network node is in an energy saving state, or it is determined that the active unit and/or the transmitting unit and/or the power amplifier unit of the network node is in an off state.

In an embodiment, the operational status of the network node includes energy saving of the network node; and the base station and the network node are predefined such that: in response to a user access or a data transmission performed by an activated user, it is determined that the network node is in a non-energy-saving state, or it is determined that an active unit and/or a transmitting unit and/or a power amplifier unit of the network node is in an on state; otherwise, it is determined that the network node is in an energy-saving state, or it is determined that the active unit and/or the transmitting unit and/or the power amplifier unit of the network node is in an off state.

In an embodiment, the base station and the network node are predefined such that: in response to a user access or in response to presence of an activated user and a data transmission performed by the activated user, a beam or phase or operational mode of the network node is one or a subset of a predefined set of beams or phases or operational modes.

In an embodiment, the base station and the network node are predefined such that in a slot group 1, a beam or phase or operational mode of the network node is one or a subset of a predefined set A of beams or phases or operational modes; and the base station and the network node are predefined such that in a slot group 2, the beam or phase or operational mode of the network node is one or a subset of a predefined set B of beams or phases or operational modes.

An embodiment of the present application provides a control apparatus, applied to a network node. The control apparatus includes: a first module, configured for receiving signaling sent by a base station, where the signaling is used for indicating an operational status and/or a phase status of the network node; and a second module, configured for adjusting the operational status and/or the phase status of the network node according to the signaling, or predefining an operational status and/or a phase status of the network node between a base station and the network node.

An embodiment of the present application provides a control apparatus, applied to a base station. The control apparatus includes: a third module, configured for determining an operational status and/or a phase status of a network node; and a fourth module, configured for: sending signaling to the network node, where the signaling is used for indicating the operational status and/or the phase status of the network node, or predefining an operational status and/or a phase status of a network node between the base station and the network node.

An embodiment of the present application provides a network node, including the control apparatus in the above embodiment.

An embodiment of the present disclosure provides a base station, including the control apparatus in the above embodiment.

Beneficial effects of the present disclosure are as follows. When the present disclosure is applied to a network node, signaling sent by a base station is received, and an operational status and/or a phase status of the network node or between the base station and the network node is adjusted according to the signaling. As such, the operational status and/or the phase status of the network node or between the base station and the network node can be adjusted as required, to effectively solve the problems regarding how the network node is identified by the communication network, how the communication network controls the network node, and what the network node feeds back to the communication network.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and are not intended to limit the technical schemes of the present disclosure.
FIG. 1 is a flowchart of a network node control method according to an embodiment of the present disclosure;
FIG. 2 is a flowchart of a network node control method according to another embodiment of the present disclosure;
FIG. 3 is a schematic diagram of a control apparatus for a network node according to an embodiment of the present disclosure;
FIG. 4 is a schematic diagram of another control apparatus for a network node according to an embodiment of the present disclosure;
FIG. 5 is a schematic diagram illustrating the working principle of a control apparatus for a network node according to an embodiment of the present disclosure; and
FIG. 6 is a flowchart of another control apparatus for a network node according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

As used herein, the term "embodiment" means that specific features, structures, or characteristics described in connection with the embodiment are embraced in at least one embodiment of the present disclosure. The occurrence of this phrase in different positions in the description does not necessarily refer to the same embodiment, and is also not to be construed as a separate or alternative embodiment mutually exclusive to other embodiments. It is to be explicitly and implicitly understood by those having ordinary skills in the art that the embodiments described herein may be combined with other embodiments.

It should be understood that in the description of the embodiments of the present application, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first", "second" and the like are merely used for distinguishing technical features, and are not intended to indicate or imply relative importance, or implicitly point out the number of the indicated technical features, or implicitly point out a precedence order of the indicated technical features.

The presence of an obstacle in the signal path during communication may affect the communication stability. Especially in 5G technologies, when millimeter wave 5G communication is used (with a frequency range of 24.25 to 52.6 GHz), 5G signals are likely to be blocked by obstacles due to the characteristics of high propagation loss and weak signal penetrability of millimeter waves, resulting in unsatisfactory communication stability. In a scheme provided in related technologies to solve the problem of unsatisfactory communication stability caused by obstacles in the communication process, the signal transmission power of the signal transmitting end in communication is increased, so that the signal can effectively penetrate the obstacles and be transmitted to the base station. However, this scheme has certain defects. For example, the increased power leads to an increase in the power consumption of the signal transmitting end. For example, when a mobile phone is used as the signal transmitting end, the increase in power consumption means that the mobile phone needs to consume more electricity. In addition, the increased power also leads to the accelerated degrading of electronic components at the signal transmitting end, reducing the service life of the electronic device.

An IRS is a two-dimensional artificial material, which is composed of a large number of specially designed scattering elements. Therefore, the IRS can convert an incident signal in different manners. Each scattering element of the IRS can be controlled in a software-defined manner to change the reflected electromagnetic characteristics of the incident signal on the scattering element, to cause the signal to have stronger penetrability and stability. However, in related technologies and academic studies, the IRS for assisting communication is composed of passive units, so the IRS can hardly be identified by the communication network. How the communication network controls the network node after the IRS accesses the communication network is also an issue. Therefore, the use of IRSs in communication is accompanied by problems regarding how the communication network controls the network node and what the network node feeds back to the communication network.

To solve the above problems, an embodiment of the present application provides a network node control method.

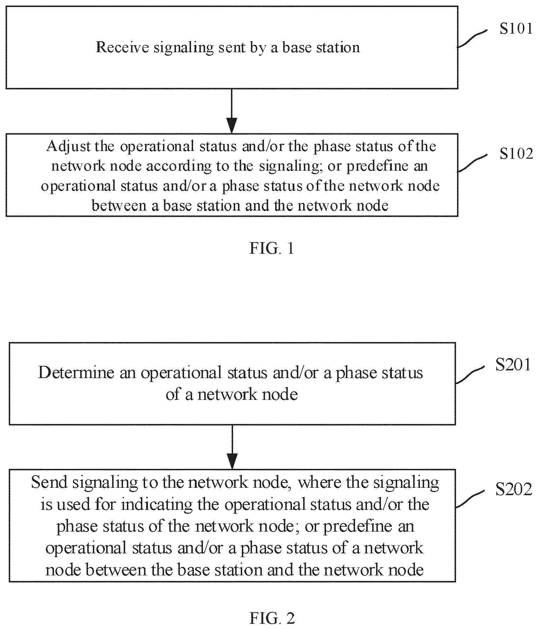

FIG. 1 is a flowchart of a network node control method according to an embodiment of the present disclosure. As shown in FIG. 1, an embodiment of the present application provides a network node control method, applied to a network node. The method includes the following steps S101 and S102.

At S101, signaling sent by a base station is received, where the signaling is used for indicating an operational status and/or a phase status of the network node.

At S102, the operational status and/or the phase status of the network node is adjusted according to the signaling; or an operational status and/or a phase status of the network node is predefined between a base station and the network node.

It should be noted that the network node control method provided in this embodiment is applied to a network node, and the network node is provided with an IRS. The IRS is composed of a plurality of passive units. A control unit is used to control a reflection phase and an operational mode of each passive unit, to change the reflected electromagnetic characteristics of an incident signal on the passive unit. Therefore, the network node provided with the IRS can effectively convert the incident signal in different operational modes.

Different phase states correspond to different beamforming or precoding or beam directions or different transmission configuration indications or spatial domain transmission filters or spatial relation information (spatialRelationInfo) or Sounding Reference Symbol (SRS) resource indicators.

Different operational modes correspond to different phases, or different beamforming or precoding or beam directions or different transmission configuration indications or spatial domain transmission filters or spatial relation information (spatialRelationInfo) or SRS resource indicators.

It should be noted that adjusting the operational status and/or the phase status of the network node according to the signaling or predefining an operational status and/or a phase status of the network node between a base station and the network node includes: adjusting the operational status and/or the phase status of the network node in a software-defined manner, or predefining the operational status and/or the phase status of the network node between the base station and the network node in a software-defined manner. Therefore, when the operational status and/or the phase status of the network node needs to be adjusted, the base station needs to send signaling, where the signaling includes, information indicating the operational status and/or the phase status of the network node. Adjusting the operational status and/or the phase status of the network node or predefining the operational status and/or the phase status of the network node between the base station and the network node is for the purpose of indicating a number of sub-blocks of the network node and/or indicating an operational mode of each sub-block of the network node, such that a signal angle can be arbitrarily adjusted to produce a desired multipath effect. The multipath effect means that after an electromagnetic wave propagates via different paths, field components of the electromagnetic wave arrive at the receiving end at different time points, and are superimposed with each other according to their respective phases, leading to interference, and resulting in distortion or an error of the original signal. According to a reflective panel provided in this embodiment, the reflective characteristics of the reflective panel can be changed as required to adjust the multipath effect, so as to minimize the undesirable factors such as signal distortion and signal strength reduction caused by the multipath effect.

In some embodiments, the operational status of the network node includes network node partitioning, the network node receives signaling sent by the base station, the signaling is used for indicating a number of sub-blocks of the network node and/or for indicating an operational mode of each sub-block of the network node, including: receiving higher-layer RRC signaling from the base station and determining a starting position of a block indicating an operational mode or a phase status of a sub-block in DCI; and receiving DCI of the base station, and determining the operational mode or the phase status of the sub-block.

In this embodiment, RRC, also known as Radio Resource Management (RRM) or Radio Resource Allocation (RRA), refers to the management, control, and scheduling of radio resources based on certain strategies and means, to fully utilize the limited radio resources in the network as much as possible while meeting quality of service (QoS) requirements, such that radio signals can reach planned coverage areas, thereby improving the service capacity and resource utilization as much as possible. RRC signaling is signaling carrying RRC information. It should be noted that the signaling for controlling on/off of the signal transmitting unit and the power amplifier unit in this embodiment is not limited to radio control signaling, and other types of signaling carrying RRC information can be used as the signaling for controlling on/off of the signal transmitting unit and the power amplifier unit in this embodiment.

In this embodiment, the network node may adjust the operational status and/or the phase status of the network node in a software-defined manner; or the operational status and/or the phase status of the network node may be predefined between the base station and the network node in a software-defined manner. However, when the reflective panel of the network node includes a large number of elements, controlling the elements one by one increases the load of the control unit. Therefore, it is necessary to perform network node partitioning for the reflective panel of the network node, to implement region-based management of the network node, thereby reducing the control load, facilitating the use of multi-beam coverage, and increasing the main lobe width of the beam. A specific partitioning method includes: receiving higher-layer RRC signaling from the base station and determining a starting position of a block indicating an operational status and/or a phase status of a sub-block in DCI; and receiving DCI of the base station, and determining the operational status and/or the phase status of the sub-block.

In some embodiments, the operational status of the network node includes energy saving of the network node, bitmap signaling sent by the base station through higher-layer RRC is received, and an on/off status of an active unit and/or a transmitting unit and/or a power amplifier unit is determined.

It should be noted that an IRS including no active unit in related technologies can implement full-duplex communication, but cannot implement signal amplification. In this embodiment, the IRS of the network node further includes an active unit, and thus can implement both full-duplex communication and signal amplification. However, the presence of the active unit leads to a decrease in energy efficiency and an increase in the power consumption of the reflective panel, affecting the normal operation of the reflective panel. Therefore, it is necessary to develop a standardized on/off scheme for the signal transmitting unit and the power amplifier unit, such that the signal transmitting unit and the power amplifier unit remain on only in particular cases, and are switched off to become a passive unit in other cases. In the network node control method provided in this embodiment, a standardized on/off scheme for an active unit includes: receiving bitmap signaling sent by the base station through higher-layer RRC, and determining an on/off status of an active unit and/or a transmitting unit and/or a power amplifier unit. The on/off of the active unit is controlled according to the signaling received from the base station, such that the operational status and/or the phase status of the network node can be effectively adjusted at any time as required in different cases; or predefining the operational status and/or the phase status of the network node between the base station and the network node.

In some embodiments, the operational status of the network node includes energy saving of the network node; and the base station and the network node are predefined such that: when a beam or phase or operational mode of the network node is one or a subset of a predefined set of beams or phases or operational modes, it is determined that an active unit and/or a transmitting unit and/or a power amplifier unit of the network node is in an on state; otherwise, it is determined that the active unit and/or the transmitting unit and/or the power amplifier unit of the network node is in an off state.

This embodiment also provides another standardized on/off scheme for an active unit, which involves predefining the base station and the network node. The predefining includes: when a beam or phase or operational mode of the network node is one or a subset of a predefined set of beams or phases or operational modes, determining that an active unit and/or a transmitting unit and/or a power amplifier unit of the network node is in an on state; otherwise, determining that the active unit and/or the transmitting unit and/or the power amplifier unit of the network node is in an off state. In this embodiment, the control of the active unit is implemented by determining whether the beam or phase or operational mode is a predefined beam or phase or operational mode, and does not require manual operation. In this way, automatic control of the on/off of the active unit is achieved.

In some embodiments, the operational status of the network node includes energy saving of the network node and network node partitioning. The base station indicates an energy saving status of each sub-block of the network node through signaling, to determine whether each sub-block is in an energy saving state, or determine whether an active unit and/or a transmitting unit and/or a power amplifier unit on each sub-block is in an on state.

In some embodiments, the operational status of the network node includes energy saving of the network node; and the base station and the network node are predefined such that: when a transmission performed by the network node is a downlink transmission, it is determined that an active unit and/or a transmitting unit and/or a power amplifier unit of the network node is in an off state; and when a transmission performed by the network node is an uplink transmission, it is determined that the active unit and/or the transmitting unit and/or the power amplifier unit of the network node is in an on state; or when a transmission performed by the network node is a downlink transmission, it is determined that an active unit and/or a transmitting unit and/or a power amplifier unit of the network node is in an on state; and when a transmission performed by the network node is an uplink transmission, it is determined that the active unit and/or the transmitting unit and/or the power amplifier unit of the network node is in an off state.

This embodiment also provides another standardized on/off scheme for an active unit, which involves predefining the base station and the network node. The predefining includes: when a transmission performed by the network node is a downlink transmission, determining that an active unit and/or a transmitting unit and/or a power amplifier unit of the network node is in an off state; and when a transmission performed by the network node is an uplink transmission, determining that the active unit and/or the transmitting unit and/or the power amplifier unit of the network node is in an on state; or when a transmission performed by the network node is a downlink transmission, determining that an active unit and/or a transmitting unit and/or a power amplifier unit of the network node is in an on state; and when a transmission performed by the network node is an uplink transmission, determining that the active unit and/or the transmitting unit and/or the power amplifier unit of the network node is in an off state. In this embodiment, the control of on/off of the active unit is implemented by determining whether a transmission performed by the network node is an uplink transmission or a downlink transmission, and does not require manual operation. In this way, automatic control of the on/off of the active unit is achieved.

In some embodiments, the operational status of the network node includes energy saving of the network node; and the base station and the network node are predefined such that: when there is a user access or a data transmission performed by an activated user, it is determined that an active unit and/or a transmitting unit and/or a power amplifier unit of the network node is in an on state; otherwise, it is determined that the active unit and/or the transmitting unit and/or the power amplifier unit of the network node is in an off state.

This embodiment also provides another standardized on/off scheme for an active unit, which involves predefining the base station and the network node. The predefining includes: when there is a user access or a data transmission performed by an activated user, determining that an active unit and/or a transmitting unit and/or a power amplifier unit of the network node is in an on state; otherwise, determining that the active unit and/or the transmitting unit and/or the power amplifier unit of the network node is in an off state. That is, when there is a user accessing the network node or there is an activated user performing a data transmission, the active unit and/or the transmitting unit and/or the power amplifier unit of the network node is on; when there is no user accessing the network node or there is no activated user performing a data transmission, the active unit and/or the transmitting unit and/or the power amplifier unit of the network node is off. In this embodiment, the control of on/off of the active unit and/or the transmitting unit and/or the power amplifier unit is implemented depending on whether there is a user accessing the network node or whether there is an activated user performing a data transmission. This is because when there is a user accessing the network node, a large amount of data needs to be transmitted and a high data transmission speed is required, so the active unit and/or the transmitting unit and/or the power amplifier unit needs to be switched on. Such a control method is based on a preset control logic and does not require manual operation. In this way, automatic control of the on/off of the active unit is achieved.

In some embodiments, the base station and the network node are predefined such that: when there is a user access or when there is an activated user and a data transmission performed by the activated user, a beam or phase or operational mode of the network node is one or a subset of a predefined set of beams or phases or operational modes.

In some embodiments, the base station and the network node are predefined such that in a slot group 1, a beam or phase or operational mode of the network node is one or a subset of a predefined set A of beams or phases or operational modes; and the base station and the network node are predefined such that in a slot group 2, the beam or phase or operational mode of the network node is one or a subset of a predefined set B of beams or phases or operational modes.

Different operational modes correspond to different phases, or different beamforming or precoding or beam directions or different transmission configuration indications or spatial domain transmission filters or spatial relation information (spatialRelationInfo) or SRS resource indicators.

This embodiment provides another method for controlling a beam reflection direction of the reflective panel, where different time slot ranges are preset, and the slot range within which a current time falls is determined, to control the beam reflection direction of the reflective panel. It should be noted that because the control unit needs to determine the slot range within which the current time falls to control the beam reflection direction of the reflective panel, a first preset time slot range and a second preset time slot range should not overlap, otherwise the control unit may make a wrong judgment.

It should also be noted that the reflective panel provided in the embodiments of the present disclosure can be arranged at various positions or in various regions to obtain different technical effects. For example, by deploying a reflective panel provided in the embodiments of the present application on a building wall and carried by an aerial platform, a radio environment can be transformed into an intelligent space that can facilitate information sensing, analog computing, and wireless communication. The reflective panel provided in the embodiments of the present disclosure may be deployed at different locations and in different devices. For example, the reflective panel may be deployed on a base station of a macro cell, a base station or a transmission node of a small cell, a transmission node in a high-frequency communication system, a transmission node in an Internet of Things (IoT) system, a satellite node, etc., or may be deployed on a node in a communication system such as a terminal device (User Equipment (UE)), a mobile phone, a portable device, an automobile, a satellite node, etc., to support various user requirements, including enhancing the data transmission rate, increasing the signal coverage range, reducing the power consumption of data transmission and signal transmission, and improving the safety and stability of data transmission.

It should also be noted that the network node in the present disclosure, or referred to as a communication node, may be a Reconfigurable Intelligent Surface (RIS), an IRS, a relay, a repeater, a smart repeater, or a UE.

FIG. 2 is a flowchart of a network node control method according to another embodiment of the present disclosure. As shown in FIG. 2, an embodiment of the present application provides a network node control method, applied to a base station. The method includes the following steps S201 and S202.

At S201, an operational status and/or a phase status of a network node is determined.

At S202, signaling is sent to the network node, where the signaling is used for indicating the operational status and/or the phase status of the network node; or an operational status and/or a phase status of the network node is predefined between the base station and a network node.

In some embodiments, the operational status of the network node includes network node partitioning, the network node receives signaling sent by the base station, the signaling is used for indicating a number of sub-blocks of the network node and/or for indicating an operational mode of each sub-block of the network node, including: receiving higher-layer RRC signaling from the base station and determining a starting position of a block indicating an operational mode or a phase status of a sub-block in DCI; and receiving DCI of the base station, and determining the operational mode or the phase status of the sub-block.

This embodiment provides a method for controlling the partitioning of the reflective panel into sub-blocks, which involves receiving an amplified signal, extracting target quantity information regarding the partitioning from the amplified signal, and partitioning the reflective panel into sub-blocks according to the target quantity information. For example, assuming that a panel 1 needs to be partitioned into two sub-blocks and a panel 2 needs to be partitioned into one sub-block, the base station notifies the panel 1 and the panel 2 through signaling simultaneously. The quantity of sub-blocks into which the panel 1 is to be partitioned and the quantity of sub-blocks into which the panel 2 is to be partitioned are determined by a position parameter, and a signal containing the position parameter can notify that the panel 1 is to be partitioned into two sub-blocks and the panel 2 is to be partitioned into one sub-block.

It should be noted that after the sub-blocks are obtained through partitioning, the control unit may further combine the sub-blocks. Combining the sub-blocks can increase the quantity of passive units in the combined sub-block, to increase the coverage distance of the signal after being reflected by the panel. Therefore, the control unit can combine the sub-blocks in a case where the signal needs to be enhanced to become a narrow beam.

In some embodiments, the operational status of the network node includes energy saving of the network node, bitmap signaling sent by the base station through higher-layer RRC is received, and an on/off status of an active unit and/or a transmitting unit and/or a power amplifier unit is determined.

In some embodiments, the operational status of the network node includes energy saving of the network node; and the base station and the network node are predefined such that: when a beam or phase or operational mode of the network node is one or a subset of a predefined set of beams or phases or operational modes, it is determined that the network node is in a non-energy-saving state, or it is determined that an active unit and/or a transmitting unit and/or a power amplifier unit of the network node is in an on state; otherwise, it is determined that the network node is in an energy-saving state, or it is determined that the active unit and/or the transmitting unit and/or the power amplifier unit of the network node is in an off state.

In some embodiments, the operational status of the network node includes energy saving of the network node; and the base station and the network node are predefined such that: when a transmission performed by the network node is a downlink transmission, it is determined that the network node is in an energy saving state, or it is determined that an active unit and/or a transmitting unit and/or a power amplifier unit of the network node is in an off state; and when a transmission performed by the network node is an uplink transmission, it is determined that the network node is in a non-energy-saving state, or it is determined that the active unit and/or the transmitting unit and/or the power amplifier unit of the network node is in an on state; or
when a transmission performed by the network node is a downlink transmission, it is determined that the network node is in a non-energy-saving state, or it is determined that an active unit and/or a transmitting unit and/or a power amplifier unit of the network node is in an on state; and when a transmission performed by the network node is an uplink transmission, it is determined that the network node is in an energy saving state, or it is determined that the active unit and/or the transmitting unit and/or the power amplifier unit of the network node is in an off state.

Different operational modes correspond to different phases, or different beamforming or precoding or beam directions or different transmission configuration indications or spatial domain transmission filters or spatial relation information (spatialRelationInfo) or SRS resource indicators.

This embodiment provides another standardized scheme for controlling on/off of the signal transmitting unit and the power amplifier unit. In this embodiment, the on/off of the signal transmitting unit and the power amplifier unit is controlled by determining whether a data transmission is an uplink data transmission or a downlink data transmission. The uplink data transmission means a transmission of data from a terminal node to the base station, and the downlink data transmission means a transmission of data from the base station to a terminal node. During the uplink data transmission, the terminal node generally transmits a signal using a low power, and the transmitted signal is susceptible to interference from other signals and obstacles, so it is necessary to increase the signal power and transmission speed. Accordingly, in this embodiment, the signal transmitting unit and the power amplifier unit are switched on during the uplink data transmission, to amplify the signal during the uplink data transmission, thereby reducing the interference from other signals and obstacles.

In some embodiments, the operational status of the network node includes energy saving of the network node; and the base station and the network node are predefined such that: when there is a user access or a data transmission performed by an activated user, it is determined that an active unit and/or a transmitting unit and/or a power amplifier unit of the network node is in an on state; otherwise, it is determined that the active unit and/or the transmitting unit and/or the power amplifier unit of the network node is in an off state.

In some embodiments, the base station and the network node are predefined such that: when there is a user access or when there is an activated user and a data transmission performed by the activated user, a beam or phase or operational mode of the network node is one or a subset of a predefined set of beams or phases or operational modes.

This embodiment provides another standardized scheme for controlling on/off of the signal transmitting unit and the power amplifier unit. In this embodiment, the on/off of the signal transmitting unit and the power amplifier unit is controlled by determining whether the reflective panel is in a data transmission state. When the reflective panel is in the data transmission state, it indicates that the reflective panel is being used by a device such as a terminal device or a base station, so it is necessary to switch on the signal transmitting unit and the power amplifier unit, to amplify the signal during the data transmission, thereby reducing the interference from other signals and obstacles.

In some embodiments, the base station and the network node are predefined such that in a slot group 1, a beam or phase or operational mode of the network node is one or a subset of a predefined set A of beams or phases or operational modes; and the base station and the network node are predefined such that in a slot group 2, the beam or phase or operational mode of the network node is one or a subset of a predefined set B of beams or phases or operational modes.

This embodiment provides another method for controlling a beam direction of the network node, where different time slot ranges are preset, and the slot range within which a current time falls is determined, to control the beam reflection direction of the reflective panel. It should be noted that because the control unit needs to determine the slot range within which the current time falls to control the beam reflection direction of the reflective panel, a first preset time slot range and a second preset time slot range should not overlap, or otherwise the control unit may make a wrong judgment.

In this embodiment, the slot ranges may also be set according to different requirements. For example, when the amount of data to be transmitted is large and the load of the device is heavy, the slot ranges need to be set based on the traffic volume. To be specific, the amount of data to be transmitted is detected. If the amount of data is greater than a preset threshold, the first preset slot range is set to be larger, such that the transmission task with a large data amount can be completed as soon as possible. If the amount of data is less than or equal to the preset threshold, the second preset slot range is set to be larger, such that the data transmission task with a small data amount and little time consumption can be completed within a suitable time range. In this way, both the quality and stability of data transmission are improved.

In addition, in this embodiment, the slot ranges may alternatively be set according to priorities of data transmissions. To be specific, a priority of data to be transmitted is detected. If the priority of the data to be transmitted is high, the first preset slot range is set to be larger, such that the transmission task with a high priority can be completed as soon as possible. If the priority of the data to be transmitted is low, the second preset slot range is set to be larger, to provide a convenient transmission channel for a high-priority data transmission task. The low-priority data transmission task is completed after the high-priority data transmission task. In this way, when the transmission bandwidth is limited, the high-priority data transmission task is preferentially completed, thereby improving the transmission efficiency of important data.

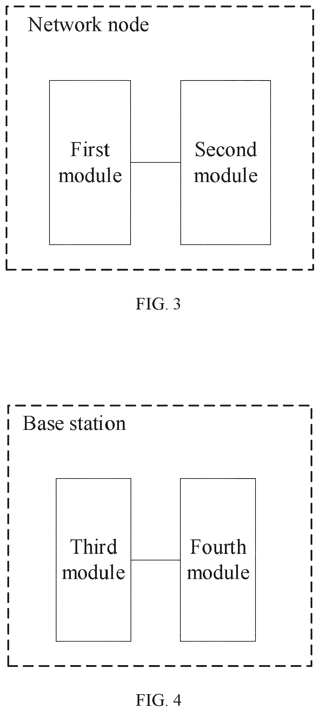

As shown in FIG. 3, an embodiment of the present application provides a control apparatus, applied to a network node. The control apparatus includes: a first module, configured for receiving signaling sent by a base station, where the signaling is used for indicating an operational status and/or a phase status of the network node; and a second module, configured for adjusting the operational status and/or the phase status of the network node according to the signaling, or predefining an operational status and/or a phase status of the network node between a base station and the network node.

As shown in FIG. 4, an embodiment of the present application further provides a control apparatus, applied to a base station. The control apparatus includes: a third module, configured for determining an operational status and/or a phase status of a network node; and a fourth module, configured for: sending signaling to the network node, where the signaling is used for indicating the operational status and/or the phase status of the network node, or predefining an operational status and/or a phase status of a network node between the base station and the network node.

The description also provides specific embodiments in which the network node control method is applied to a terminal device or a base station for data transmission.

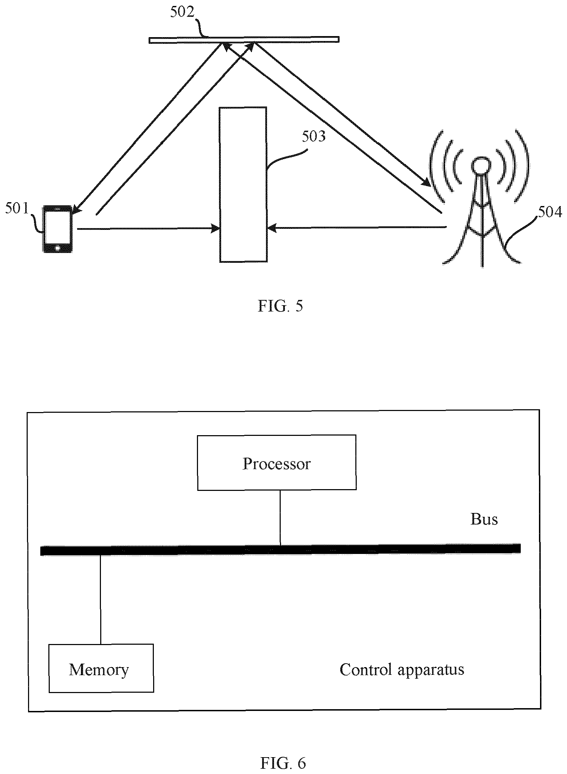

FIG. 5 is a schematic diagram illustrating the working principle of a reflective panel according to an embodiment of the present disclosure. As shown in FIG. 5, an obstacle 503 exists between a terminal device 501 and a base station 504, and a reflective panel 502 provided in the embodiments of the present application is arranged above the obstacle. In the process of data transmission between the terminal device 501 and the base station 504, if the reflective panel 502 provided in the embodiments of the present application does not exist, a data transmission signal sent by the terminal device 501 needs to penetrate through the obstacle 503 to reach the base station 504, and a data transmission signal sent by the base station 504 also needs to penetrate through the obstacle 503 to reach the terminal device 501. However, in the process of penetrating through the obstacle 503, some signals with unsatisfactory penetration ability (such as 5G millimeter wave signals) may experience problems such as signal strength weakening and signal distortion, resulting in unstable data transmission between the terminal device 501 and the base station 504. After the reflective panel 502 provided in the embodiments of the present application is arranged, the data transmission signal sent by the terminal device 501 can be reflected by the reflective panel 502 to the base station 504, and similarly, the data transmission signal sent by the base station 504 can be reflected by the reflective panel 502 to the terminal device 501, thereby effectively reducing the adverse effect of the presence of the obstacle 503 on the data transmission between the terminal device 501 and the base station 504.

In addition, the reflective panel 502 is different from an ordinary panel with a reflective function. The reflective panel 502 can also convert an incident signal in different manners, and each passive unit on the reflective panel 502 can be controlled in a software-defined manner to change the reflected electromagnetic characteristics of the incident signal on a scattering element, to enable the signal to have stronger penetrability and stability.

In addition, a plurality of reflective panels may be arranged at different positions. For example, the beam reflection direction of the reflective panel 502 may be controlled by determining whether the reflective panel 502 is in a data transmission state. When the reflective panel 502 is in the data transmission state, it indicates that the reflective panel 502 is being used by the terminal device 501 or the base station 504, so a beam reflection direction of the current reflective panel 502 needs to be toward the terminal device 501. When the reflective panel 502 is not in the data transmission state, it indicates that the reflective panel 502 is not being used by the terminal device 501, the base station 504, or other devices, so the beam reflection direction of the current reflective panel 502 is controlled to be toward another reflective panel, to increase the reflection distance and improve the stability of the reflected signal.

In addition, different time slot ranges may be preset, and the slot range within which the current time falls is determined, to control the beam reflection direction of the reflective panel 502. To be specific, a current moment is acquired. If the current moment falls within the first preset slot range, the beam reflection direction of the current reflective panel 502 is controlled to be toward the terminal device 501. If the current moment falls within the second preset slot range, the beam reflection direction of the current reflective panel 502 is controlled to be toward another reflective panel, to increase the reflection distance and expand the signal coverage. The another reflective panel is a reflective panel other than the current reflective panel.

In an embodiment, the present disclosure further provides a base station, including the control apparatus in the above embodiments of the present disclosure.

As shown in FIG. 6, an embodiment of the present disclosure provides a control apparatus.

The control apparatus includes one or more processors and one or more memories. FIG. 6 uses one processor and one memory as an example. The processor and the memory may be connected by a bus or in other ways. Connection by a bus is used as an example in FIG. 6.

The memory, as a non-transitory computer-readable storage medium, may be configured for storing a non-transitory software program and a non-transitory computer-executable program, for example, the control method in the embodiments of the present application. The processor executes the non-transitory software program and the non-transitory computer-executable program stored in the memory, to implement the control method in the embodiments of the present application.

The memory may include a program storage area and a data storage area. The program storage area may store an operating system, and an application required by at least one function. The data storage area may store data and the like required for executing the control method in the embodiments of the present application. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but not limited to, the Internet, an intranet, a local area network, a mobile communication network, and combinations thereof.

The non-transitory software program and the non-transitory computer-executable program required for implementing the control method in the embodiments of the present application are stored in the memory which, when executed by one or more processors, cause the one or more processors to implement the control method in the embodiments of the present application,

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as a computer-readable program, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes a computer-readable program, data structures, program modules, or other data in a modulated data signal such as a carrier or other transport mechanism, and can include any information delivery medium.

Although some embodiments of the present application have been described above, the present application is not limited to the implementations described above. Those having ordinary skills in the art can make various equivalent modifications or replacements without departing from the scope of the present application. Such equivalent modifications or replacements fall within the scope defined by the claims of the present application.

## Claims

1. A network node control method, applied to a network node, the method comprising:
receiving signaling sent by a base station, wherein the signaling is used for indicating an operational status and/or a phase status of the network node, and
adjusting the operational status and/or the phase status of the network node according to the signaling; or
predefining an operational status and/or a phase status of the network node between a base station and the network node.

2. The network node control method of claim 1, wherein the operational status of the network node comprises network node partitioning, the network node receives signaling sent by the base station, the signaling is used for indicating a number of sub-blocks of the network node and/or for indicating an operational mode or a phase status of each sub-block of the network node, the method comprising: receiving higher-layer Radio Resource Control (RRC) signaling from the base station and determining a starting position of a block indicating an operational mode or a phase status of a sub-block in downlink control information (DCI); and receiving DCI of the base station, and determining the operational mode or the phase status of the sub-block.

3. The network node control method of claim 1, wherein the operational status of the network node comprises energy saving of the network node, signaling sent by the base station through higher-layer RRC is received, determined whether the network node is in an energy saving state, or an on/off status of an active unit and/or a transmitting unit and/or a power amplifier unit is determined.

4. The network node control method of claim 1, wherein the operational status of the network node comprises energy saving of the network node; and the base station and the network node are predefined such that: in response to a beam or phase or operational mode of the network node being one or a subset of a predefined set of beams or phases or operational modes, it is determined that the network node is in a non-energy-saving state, or it is determined that an active unit and/or a transmitting unit and/or a power amplifier unit of the network node is in an on state; otherwise, it is determined that the network node is in an energy-saving state, or it is determined that the active unit and/or the transmitting unit and/or the power amplifier unit of the network node is in an off state.

5. The network node control method of claim 1, wherein the operational status of the network node comprises energy saving of the network node; and the base station and the network node are predefined such that: in response to a transmission performed by the network node being a downlink transmission, it is determined that the network node is in an energy saving state, or it is determined that an active unit and/or a transmitting unit and/or a power amplifier unit of the network node is in an off state; and in response to a transmission performed by the network node being an uplink transmission, it is determined that the network node is in a non-energy-saving state, or it is determined that the active unit and/or the transmitting unit and/or the power amplifier unit of the network node is in an on state; or
in response to a transmission performed by the network node being a downlink transmission, it is determined that the network node is in a non-energy-saving state, or it is determined that an active unit and/or a transmitting unit and/or a power amplifier unit of the network node is in an on state; and in response to a transmission performed by the network node being an uplink transmission, it is determined that the network node is in an energy saving state, or it is determined that the active unit and/or the transmitting unit and/or the power amplifier unit of the network node is in an off state.

6. The network node control method of claim 1, wherein the operational status of the network node comprises energy saving of the network node; and the base station and the network node are predefined such that: in response to a user access or a data transmission performed by an activated user, it is determined that the network node is in a non-energy-saving state, or it is determined that an active unit and/or a transmitting unit and/or a power amplifier unit of the network node is in an on state; otherwise, it is determined that the network node is in an energy-saving state, or it is determined that the active unit and/or the transmitting unit and/or the power amplifier unit of the network node is in an off state.

7. The network node control method of claim 1, wherein the base station and the network node are predefined such that: in response to a user access or in response to presence of an activated user and a data transmission performed by the activated user, a beam or phase or operational mode of the network node is one or a subset of a predefined set of beams or phases or operational modes.

8. The network node control method of claim 1, wherein the base station and the network node are predefined such that in a slot group 1, a beam or phase or operational mode of the network node is one or a subset of a predefined set A of beams or phases or operational modes; and the base station and the network node are predefined such that in a slot group 2, the beam or phase or operational mode of the network node is one or a subset of a predefined set B of beams or phases or operational modes.

9. A network node control method, applied to a base station, the method comprising:
determining an operational status and/or a phase status of a network node, and
sending signaling to the network node, wherein the signaling is used for indicating the operational status and/or the phase status of the network node; or
predefining an operational status and/or a phase status of a network node between the base station and the network node.

10. The network node control method of claim 9, wherein the operational status of the network node comprises network node partitioning, the network node receives signaling sent by the base station, the signaling is used for indicating a number of sub-blocks of the network node and/or for indicating an operational mode or a phase status of each sub-block of the network node, comprising: receiving higher-layer Radio Resource Control (RRC) signaling from the base station and determining a starting position of a block indicating an operational mode or a phase status of a sub-block in downlink control information (DCI); and receiving DCI of the base station, and determining the operational mode or the phase status of the sub-block.

11. The network node control method of claim 9, wherein the operational status of the network node comprises energy saving of the network node, signaling sent by the base station through higher-layer RRC is received, and it is determined whether the network node is in an energy saving state, or an on/off status of an active unit and/or a transmitting unit and/or a power amplifier unit is determined.

12. The network node control method of claim 9, wherein the operational status of the network node comprises energy saving of the network node; and the base station and the network node are predefined such that: in response to a beam or phase or operational mode of the network node being one or a subset of a predefined set of beams or phases or operational modes, it is determined that the network node is in a non-energy-saving state, or it is determined that an active unit and/or a transmitting unit and/or a power amplifier unit of the network node is in an on state; otherwise, it is determined that the network node is in an energy-saving state, or it is determined that the active unit and/or the transmitting unit and/or the power amplifier unit of the network node is in an off state.

13. The network node control method of claim 9, wherein the operational status of the network node comprises energy saving of the network node; and the base station and the network node are predefined such that: in response to a transmission performed by the network node being a downlink transmission, it is determined that the network node is in an energy saving state, or it is determined that an active unit and/or a transmitting unit and/or a power amplifier unit of the network node is in an off state; and in response to a transmission performed by the network node being an uplink transmission, it is determined that the network node is in a non-energy-saving state, or it is determined that the active unit and/or the transmitting unit and/or the power amplifier unit of the network node is in an on state; or
in response to a transmission performed by the network node being a downlink transmission, it is determined that the network node is in a non-energy-saving state, or it is determined that an active unit and/or a transmitting unit and/or a power amplifier unit of the network node is in an on state; and in response to a transmission performed by the network node being an uplink transmission, it is determined that the network node is in an energy saving state, or it is determined that the active unit and/or the transmitting unit and/or the power amplifier unit of the network node is in an off state.

14. The network node control method of claim 9, wherein the operational status of the network node comprises energy saving of the network node; and the base station and the network node are predefined such that: in response to a user access or a data transmission performed by an activated user, it is determined that the network node is in a non-energy-saving state, or it is determined that an active unit and/or a transmitting unit and/or a power amplifier unit of the network node is in an on state; otherwise, it is determined that the network node is in an energy-saving state, or it is determined that the active unit and/or the transmitting unit and/or the power amplifier unit of the network node is in an off state.

15. The network node control method of claim 9, wherein the base station and the network node are predefined such that: in response to a user access or in response to presence of an activated user and a data transmission performed by the activated user, a beam or phase or operational mode of the network node is one or a subset of a predefined set of beams or phases or operational modes.

16. The network node control method of claim 9, wherein the base station and the network node are predefined such that in a slot group 1, a beam or phase or operational mode of the network node is one or a subset of a predefined set A of beams or phases or operational modes; and the base station and the network node are predefined such that in a slot group 2, the beam or phase or operational mode of the network node is one or a subset of a predefined set B of beams or phases or operational modes.

17. A control apparatus, applied to a network node, the control apparatus comprising:
a first module, configured for receiving signaling sent by a base station, wherein the signaling is used for indicating an operational status and/or a phase status of the network node; and
a second module, configured for adjusting the operational status and/or the phase status of the network node according to the signaling, or predefining an operational status and/or a phase status of the network node between a base station and the network node.

18. A control apparatus, applied to a base station, the control apparatus comprising:
a third module, configured for determining an operational status and/or a phase status of a network node; and
a fourth module, configured for: sending signaling to the network node, wherein the signaling is used for indicating the operational status and/or the phase status of the network node, or predefining an operational status and/or a phase status of a network node between the base station and the network node.

19. A network node, comprising the control apparatus of claim 17.

20. A base station, comprising the control apparatus of claim 18.
